# EUROPÄISCHE PATENTSCHRIFT

(11) **EP 3 475 018 B1**
(45) Veröffentlichungstag und Bekanntmachung des Hinweises auf die Patenterteilung: **30.12.2020**
(21) Anmeldenummer: 17768691.2
(22) Anmeldetag: 30.08.2017
(51) Int. Cl.: B22F 3/105, B28B 1/00, B29C 64/153, B08B 5/04, B08B 7/02, B08B 9/00, B22D 29/00, B29C 64/35, B33Y 40/00

(54) **VERFAHREN ZUM AUSTRAGEN VON FÜLLMATERIAL AUS EINEM IN EINEM BAUTEIL VORHANDENEN HOHLRAUM UND APPARAT ZUR DURCHFÜHRUNG DIESES VERFAHRENS**
METHOD OF DISCHARGING A FILLING MATERIAL PRESENT IN A CAVITY OF A PART AND APPARATUS TO CONDUCT THE METHOD
PROCÉDÉ PERMETTANT DE VIDER LES CAVITÉS REMPLIES DE POUDRE D'UNE PIÈCE ET APPAREIL POUR LA MISE EN OEUVRE DE CE PROCÉDÉ

(30) Priorität: 06.09.2016 DE 102016216839
(43) Veröffentlichungstag der Anmeldung: 01.05.2019
(73) Patentinhaber: Siemens Aktiengesellschaft, 80333 München (DE)
(72) Erfinder: KIENER, Christoph, 81369 München (DE)
(86) Internationale Anmeldenummer: PCT/EP2017/071776
(87) Internationale Veröffentlichungsnummer: WO 2018/046373

(56) Entgegenhaltungen:
- DE-A1- 3 010 964
- JP-A- 2003 225 948
- US-A1- 2010 291 401

## Beschreibung

Die Erfindung betrifft ein Verfahren zum Austragen von Füllmaterial aus einem in einem Bauteil vorhandenen Hohlraum, wobei der Hohlraum eine Verbindungsöffnung zur Umgebung des Bauteils aufweist. Dabei werden folgende Verfahrensschritte durchlaufen: Halten des Bauteils in einer beweglichen Halterung und Bewegen des Bauteils bei gleichzeitigem Austrag des Füllmaterials durch die Verbindungsöffnung. Außerdem betrifft die Erfindung Mittel, welche geeignet ist, das eingangs angegebene Verfahren durchzuführen.

Die DE 30 10 964 A1 zeigt ein Verfahren zum Entleeren von Werkstücken, bei welchem die hohlraumhaltigen Werkstücke, insbesondere Gussteile mit unterschiedlich gerichteten Hohlräumen, die mit Strahlmittel oder Granulat gefüllt sind, gleichzeitig um eine Achse gedreht, um eine andere Achse geschwenkt und einer Vibration ausgesetzt werden.

Das eingangs angegebene Verfahren ist beispielsweise in der US 2016/0074940 A1 beschrieben. Gemäß diesem Dokument besteht das Problem, dass Bauteile, die mittels eines additiven Verfahrens, wie z. B. Laserschmelzen, in einem Pulverbett hergestellt worden sind, anschließend von den nicht verschmolzenen Partikeln des Pulverbetts befreit werden müssen. Besondere Probleme macht dies in Hohlräumen, die in dem Bauteil hergestellt wurden. Um das Pulver aus diesen Hohlräumen entfernen zu können, weist das Bauteil Verbindungsöffnungen zwischen dem Hohlraum und der Umgebung des Bauteils auf, durch die das Pulver ausgetragen werden kann. Dazu kann das Bauteil bewegt, beispielsweise gedreht oder geschwenkt, werden, um das Pulver in der Kavität nach und nach zur Verbindungsöffnung zu transportieren. Bei komplizierten Hohlraumgeometrien bzw. bei großen Hohlräumen ist dieses Verfahren zeitaufwändig und es besteht überdies die Gefahr, dass das Pulver aus dem Hohlraum nicht vollständig ausgetragen werden kann.

Ein ähnliches Problem besteht bei der additiven Herstellung von Bauteilen in Flüssigkeiten, wie dies beispielsweise bei der Stereolithographie der Fall ist. Das Bauteil wird durch lokale Verfestigung eines flüssigen Materials (beispielsweise einer Harzverbindung) hergestellt, wobei in hergestellten Hohlräumen das flüssige Rohmaterial verbleibt. Dieses ist ebenso wie das Pulver als Füllmaterial in den Hohlräumen aufzufassen. Dies kann durch Verbindungsöffnungen im Bauteil herausfließen, wobei das Bauteil abhängig von der Geometrie des Hohlraums ebenfalls geschwenkt oder gedreht werden muss.

Zuletzt muss das eingangs angegebene Verfahren auch angewendet werden, wenn Hohlräume von gegossenen oder gespritzten Bauteilen von dem Kernmaterial befreit werden müssen, welches zur Ausbildung von Hohlräumen in die Gussform eingelegt wurde. Das Kernmaterial stellt insofern auch ein Füllmaterial dar, welches sich im Hohlraum eines Bauteils befinden kann. Dieses kann je nach Materialbeschaffenheit ausgeschmolzen, aufgelöst oder mechanisch zerstört werden, wobei das Füllmaterial auf diesem Wege fließfähig wird und durch die Verbindungsöffnung aus dem Bauteil herausfließen kann.

Als additive Fertigungsverfahren sind neben den flüssigkeitsbasierten außerdem die pulverbettbasierten Fertigungsverfahren zu nennen, weil Bauteile, die im Pulverbett mit einem Hohlraum hergestellt werden, automatisch mit dem Material des Pulverbetts als Füllmaterial gefüllt sind. Im Einzelnen sind Verfahren anwendbar, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial kann beispielsweise pulverförmig oder flüssig sein, wobei durch das additive Fertigungsverfahren das Material zur Herstellung des Bauteils chemisch oder physikalisch verfestigt wird.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten des Bauteils umgewandelt, damit in der Fertigungsanlage die geeigneten Prozessschritte zur sukzessiven Herstellung des Bauteils ablaufen können. Die Daten werden dafür so aufbereitet, dass die geometrischen Daten für die jeweils herzustellenden Lagen (Slices) des Bauteils zur Verfügung stehen, was auch als Slicen bezeichnet wird.

Als Beispiele für das additive Fertigen können das selektive Lasersintern (auch SLS für Selective Laser Sintering), das Selektive Laserschmelzen (auch SLM für Selective Laser Melting) und das Elektronenstrahlschmelzen (auch EBM für Electron Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Es besteht der Wunsch, Füllmaterial aus Hohlräumen von Bauteilen möglichst vollständig und in möglichst kurzer Zeit entfernen zu können. Die Aufgabe der Erfindung liegt daher darin, ein Verfahren zum Austragen von Füllmaterial aus einem Bauteil anzugeben, mit dem der Austrag von Füllmaterial möglichst vollständig und in möglichst kurzer Zeit erledigt werden kann. Außerdem ist es Aufgabe der Erfindung, Mittel zur Umsetzung dieses Verfahrens anzugeben.

Diese Aufgabe wird durch das eingangs angegebene Verfahren erfindungsgemäß dadurch gelöst, dass ein Prozessor die Geometriedaten des Bauteils verarbeitet, wobei ein auf dem Prozessor ablaufendes Computerprogramm die Geometrie des Hohlraums und der Verbindungsöffnung in dem Bauteil berücksichtigt. Anschließend rechnet das Computerprogramm unter Berücksichtigung der Schwerkraft eine notwendige Positionierung des Bauteils und einen anschließenden notwendigen Bewegungsablauf für das Bewegen des Bauteils im Raum, damit das Füllmaterial durch den Hohlraum zur Verbindungsöffnung und durch die Verbindungsöffnung aus dem Bauteil ausgetragen wird. Mit Hilfe dieses berechneten Bewegungsablaufs wird das Bauteil anschließend bei gleichzeitigem Austrag des Füllmaterials durch die Verbindungsöffnung bewegt, wobei vorteilhaft ein optimaler, d. h. möglichst vollständiger Austrag an Füllmaterial bei einem optimierten, d. h. möglichst kurzen Zeitbedarf erfolgt. Das Bauteil kann vor dem Bewegen von der Bauplattform, auf dem es hergestellt wurde, getrennt werden oder zusammen mit der Bauplatte bewegt werden.

Das Computerprogramm kann die Geometriedaten des hergestellten Bauteils beispielsweise aus einem CAD-Datensatz übernehmen, der im Rahmen einer Konstruktion des Bauteils und der Vorbereitung der Erstellung der Daten für das additive Herstellen bereits erzeugt wurde. Auch der Datensatz zur Herstellung des additiven Bauteils eignet sich grundsätzlich, um für eine Berechnung der Positionierung oder Position (diese Begriffe werden synonym verwendet) des Bauteils und des anschließenden Bewegungsablaufs herangezogen zu werden. Unter der Positionierung des Bauteils versteht man die Position, die das Bauteil einnimmt, bevor der errechnete Bewegungsablauf startet. Durch den Bewegungsablauf verlässt das Bauteil zwangsläufig die Positionierung, wobei in dem Bewegungsablauf eventuell weitere Zwischenpositionen oder Zwischenpositionierungen (beide Begriffe werden synonym verwendet) angelaufen werden, in denen das Bauteil für einen definierten Zeitraum verharrt, um dem Füllstoff Zeit für ein Fließen zu geben. Diese Zwischenpositionierungen sollen allerdings als Teil des Bewegungsablaufs verstanden werden.

Insbesondere bei Kleinserien wird der Mehraufwand, der durch die Berechnung des Bewegungsablaufs und der Positionierung des Bauteils durch das Computerprogramm entsteht, durch die Zeitersparnis aufgewogen, die beim anschließenden Entfernen des Füllmaterials aus der Kavität gespart wird. Auch bei Einzelanfertigungen lohnt sich der Aufwand der Berechnung, weil die Überprüfung, ob ein Hohlraum vollständig vom Füllmaterial befreit wurde, sehr zeitraubend ist und ggf. mehrere Iterationen des Austragsverfahrens erforderlich sind, um einen vollständigen Austrag zu erreichen. Dies lässt sich durch eine Vorabberechnung der Positionierung und des Bewegungsablaufs mittels des Computerprogramms vermeiden.

Dabei ist es erfindungsgemäß vorgesehen, dass durch das Computerprogramm das Austragen des Füllmaterials simuliert wird, wobei bei der Simulation die Fließeigenschaften des Füllmaterials berücksichtigt werden. Dabei werden wiederholt Simulationen mit verschiedenen Positionierungen und/oder verschiedenen Bewegungsabläufen durchgeführt, wobei am Ende diejenige Positionierung und derjenige Bewegungsablauf ausgewählt wird, bei der und bei dem das meiste Füllmaterial oder alles Füllmaterial in der kürzesten Zeit aus den Bauteilen ausgetragen wird. Das Optimierungsziel hängt von den Gegebenheiten des Einzelfalls ab. Ist die Geometrie des Hohlraums so geartet, dass nicht alles Füllmaterial aus dem Bauteil entfernt werden kann, ist das Optimierungsziel vorrangig, einen möglichst großen Anteil zu entfernen. Lässt sich grundsätzlich alles Füllmaterial aus dem Hohlraum entfernen, so ist das Optimierungsziel vorrangig, diesen Prozess in möglichst kurzer Zeit durchzuführen, so dass der Bewegungsablauf hinsichtlich seiner Effizienz optimiert wird.

Gemäß einer vorteilhaften Ausgestaltung der Erfindung kann vorgesehen werden, dass vor und/oder nach dem Bewegen des Bauteils ein Absaugen von Füllmaterial durch die Verbindungsöffnung hindurch erfolgt. Hierfür wird eine geeignete Absaugvorrichtung mit einem Saugrüssel vorgesehen. Ein Absaugen vor dem Bewegen des Bauteils kann zumindest im Bereich nahe der Verbindungsöffnung bereits zu einem Austrag von Füllmaterial führen. Gleichzeitig wird das Füllmaterial, wenn es sich um ein Pulver handelt, gelockert, wodurch der Austrag durch Bewegen anschließend erleichtert wird. Wenn der Austrag durch Bewegen fast vollständig erfolgt ist, so dass nur noch geringe Reste an Pulver in dem Hohlraum verblieben sind, kann ein anschließendes Absaugen vorteilhaft dazu genutzt werden, diese Reste noch zu entfernen. Insbesondere, wenn der Hohlraum zwei Verbindungsöffnungen aufweist, ist diese Methode besonders wirkungsvoll, da die durch die eine Verbindungsöffnung mit den Partikeln abgesaugte Luft ersetzt werden kann, indem Luft durch die andere Verbindungsöffnung nachströmt.

Gemäß einer anderen Ausgestaltung der Erfindung ist vorgesehen, dass sich die Halterung an einem Roboter befindet und der Bewegungsablauf durch den Roboter vollzogen wird. Der Roboter weist zu diesem Zweck einen Roboterarm auf, wobei dieser vorteilhaft Bewegungen um mindestens drei Achsen ermöglicht. Je mehr Achsen der Roboterarm zur Verfügung stellt, desto komplexer können die Bewegungen sein, die mittels des Computerprogramms errechnet werden und durch den Roboter noch umsetzbar sind. Der Roboter ist vorteilhaft in der Lage, die Bewegungen exakt umzusetzen und so das berechnete Ergebnis fehlerarm nachzubilden. Bei der Berechnung des Bewegungsablaufs muss das Computerprogramm die Freiheitsgerade des Bewegungssystems, z. B. des Roboters, berücksichtigen, damit das Bewegungssystem den berechneten Bewegungsablauf umsetzen kann.

Weiterhin kann vorteilhaft vorgesehen werden, dass das Bauteil durch einen Schwingungsgenerator in mechanische Schwingungen versetzt wird. Insbesondere können diese Schwingungen im Ultraschallbereich liegen. Hierzu wird ein geeigneter Schwingungsaktor eingesetzt, der beispielsweise an der Halterung für das Bauteil befestigt ist. Die Schwingungen werden dann vorteilhaft auf das Bauteil übertragen und verbessern die Fließfähigkeit des Füllmaterials. Hierdurch kann sowohl die ausgetragene Menge an Füllmaterial erhöht sowie die dafür erforderliche Austragszeit verringert werden.

Wenn das Füllmaterial aus einem Pulver besteht, so ist es gemäß einer weiteren vorteilhaften Ausgestaltung der Erfindung möglich, dass das Fließverhalten des Pulvers durch das Computerprogramm aus den Parametern Partikelgröße und/oder Partikelform und/oder Partikelmaterial und/oder Partikeldichte berechnet wird. Dies sind Parameter, die mit der Herstellung des Bauteils direkt zusammenhängen und teilweise durch Angaben der Pulverhersteller ergänzt werden können. Die Partikelgröße und die Partikelform ist für das Fließverhalten des Pulvers insofern relevant, dass größere Partikel schwerer fließen als kleinere Partikel und eher runde Partikel besser fließen als eher kantige Partikel. Das Partikelmaterial kann von Bedeutung sein, weil die Pulverpartikel abhängig vom Partikelmaterial unterschiedlich gut aneinander haften. Die Partikeldichte, die bei der Herstellung des Pulverbetts erzeugt wird, ist von Bedeutung, weil die Fließfähigkeit des Pulvers mit höherer Partikeldichte abnimmt. Daher ist die bereits erwähnte Einbringung von Schwingungen evtl. erforderlich, um das Fließverhalten des Pulvers überhaupt erst auszulösen.

Auch bei flüssigen Füllmaterialien ist das Fließverhalten von Bedeutung, lässt sich jedoch aus den für die Flüssigkeit geltenden Parametern (Viskosität, Oberflächenspannung, Benetzungsverhalten an den Wänden des Hohlraums) direkt ableiten. Ein eventueller Kapillareffekt der Flüssigkeit hangt auch von der Geometrie des Hohlraums ab.

Das zurückgewonnene Pulver oder die zurückgewonnene Flüssigkeit kann dem additiven Fertigungsverfahren zur Herstellung eines weiteren Bauteils wieder zugeführt werden. Es ist nicht kontaminiert, so dass die Bauteilqualität des nachfolgend hergestellten Bauteils nicht unter der Rückführung leidet. Weiterhin bedeutet eine Rückführung des Baumaterials auch, dass dieses nicht in die Umwelt gelangt und daher die gesundheitliche Belastung von Mitarbeitern in einem entsprechenden Fertigungsbetrieb gering ist.

Ein weiterer Vorteil liegt darin, dass auch größere Bauteile, die zu schwer für eine Bewegung per Hand sind, mittels eines Roboters aus der Fertigungsanlage herausgenommen und zum Austragen des Pulvers aus dem Hohlraum bewegt werden können. Hierzu muss lediglich die Kapazität bzw. die Leistung des Roboters in geeigneter Weise angepasst werden.

Weiterhin wird die eingangs angegebene Aufgabe durch ein Computerprogramm nach Anspruch 8 gelöst, wobei mit diesem die Geometrie des Hohlraums in einem Bauteil und einer Verbindungsöffnung zwischen dem Hohlraum und der Umgebung des Bauteils als Eingangsgrößen über eine Eingangsschnittstelle übergebbar sind. Dabei ist der Hohlraum mit einem Stützmaterial gefüllt, so dass unter Berücksichtigung der Schwerkraft eine notwendige Positionierung des Bauteils und ein anschließender notwendiger Bewegungsablauf des Bauteils im Raum berechenbar ist, damit das Stützmaterial durch den Hohlraum zur Verbindungsöffnung und durch die Verbindungsöffnung aus dem Bauteil ausgetragen wird. Die Positionierung und der Bewegungsablauf des Bauteils werden dann als Ausgangsgrößen über eine Ausgangsschnittstelle ausgegeben.

Dieses Computerprogramm ist geeignet, um in einem vorstehend bereits beschriebenen Verfahren zum Austragen des Materials aus einem Bauteil zur Anwendung zu kommen. Wie bereits erwähnt, kann die Geometrie, die über die Eingangsschnittstelle in das Computerprogramm eingegeben wird, Datensätzen eines CAD-Systems entnommen werden. Die Ausgangsschnittstelle des Computerprogramms ist dann beispielsweise mit einer Steuerung für einen Roboter verbunden, der das zu entleerende Bauteil zunächst in einer berechneten Position fixiert und anschließend eine Bewegung nach dem berechneten Bewegungsablauf durchführt. Dabei durchläuft das Bauteil eine bestimmte Raumkurve (Trajektorie), die aus Schwenkbewegungen und Taumelbewegungen zusammengesetzt sein kann. Auch ist es möglich, dass das Bauteil in bestimmten Zwischenpositionierungen für einen gewissen Zeitraum verharrt, um dem Füllmaterial Zeit zu geben, einen bestimmten Abschnitt des Hohlraums in Richtung zur Verbindungsöffnung zu durchlaufen.

Weiterhin wird die Aufgabe durch eine Fertigungseinheit nach Anspruch 9 gelöst, die folgende Komponenten aufweist: Eine bewegliche Halterung zum Halten des Bauteils, einen Prozessor, auf dem ein Computerprogramm der beschriebenen Art installiert ist, einen Aktor, insbesondere einen Roboter, zur Bewegung der beweglichen Halterung und eine Steuerung zum Bewegen des Aktors, wobei die Positionierung und der Bewegungsablauf als Eingangsgrößen über eine Schnittstelle übergebbar sind. Die Fertigungseinheit ist damit erfindungsgemäß darauf vorbereitet, die Daten des erfindungsgemäßen Computerprogramms zu übernehmen und somit das erfindungsgemäße Verfahren durchzuführen. Die vorstehend bereits erläuterten Vorteile werden daher durch die Fertigungseinheit ebenfalls erreicht.

Gemäß einer vorteilhaften Ausgestaltung der Fertigungseinheit weist diese Anlage zusätzlich eine Anlage zum additiven Fertigen des Bauteils und eine Materialschnittstelle zur Aufnahme des Bauteils durch die Halterung auf. Bei der Materialschnittstelle kann es sich beispielsweise um eine Schleuse oder eine Klappe handeln, die geöffnet werden kann, damit die Halterung das Bauteil von der in der Anlage vorhandenen Bauplattform abnehmen oder mitsamt der Bauplattform übernehmen kann. Der Austrag des Füllmaterials kann dann direkt im Fertigungssystem erfolgen und der Anlage zum additiven Fertigen wieder zugeführt werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel der erfindungsgemäßen Fertigungsanlage, anhand derer ein Ausführungsbeispiel des erfindungsgemäßen Verfahrens betreibbar ist, als schematische Seitenansicht, teilweise aufgeschnitten,
- Figur 2: ein Ausführungsbeispiel des erfindungsgemäßen Verfahrens, bei dem mehrere Schritte des Positionierens und Bewegens eines Bauteils schematisch dargestellt sind und
- Figur 3: ein Ausführungsbeispiel des erfindungsgemäßen Computerprogramms als Ablaufdiagramm.

Eine Fertigungseinheit 11 weist eine Anlage 12 zum additiven Herstellen eines Bauteils 13 auf, wobei es sich hierbei um eine Anlage zum selektiven Laserschmelzen handelt. Diese Anlage weist eine Materialschnittstelle 14 in Form einer Klappe auf, durch die das Bauteil von einem Roboter 15 mit vier durch Doppelpfeile angedeuteten Achsen in einer Halterung 16 aufgenommen werden kann. Außerdem weist die Fertigungseinheit 11 mehrere Absaugeinrichtungen 17a, 17b auf.

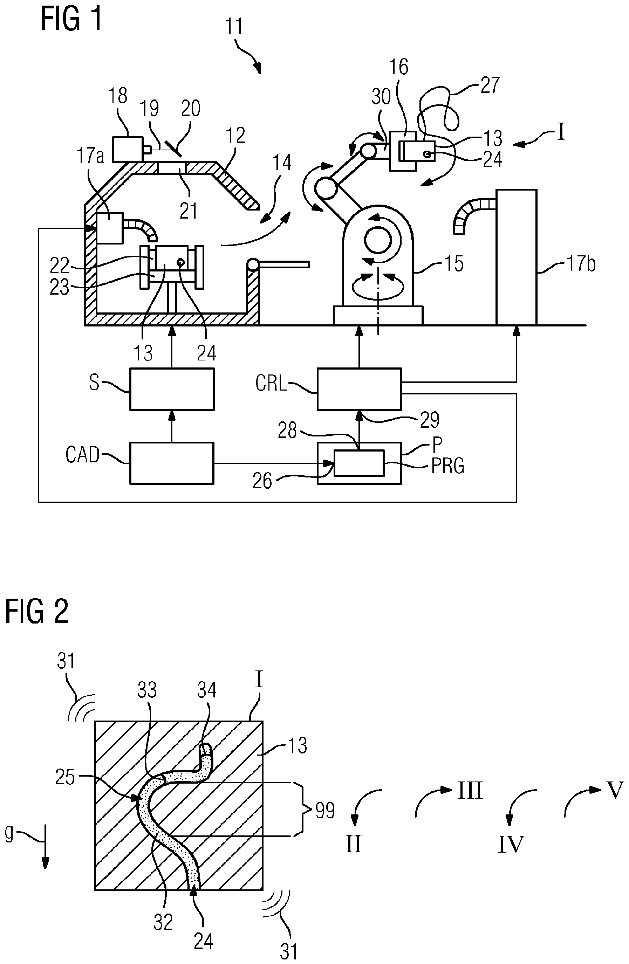

Der Aufbau der Anlage 12 zum selektiven Laserschmelzen ist an sich bekannt und in Figur 1 nur schematisch dargestellt. Ein Laser 18 erzeugt einen Laserstrahl 19, der über eine Umlenkoptik 20 durch ein Prozessfenster 21 auf ein Pulverbett 22 gerichtet wird, so dass lagenweise auf einer Bauplattform 23 das Bauteil 13 entsteht. Nach erfolgter Herstellung des Bauteils 13 kann dieses zunächst mittels der Absaugeinrichtung 17a von dem Pulverbett befreit werden. Über eine Verbindungsöffnung 24 kann außerdem bereits etwas Pulver aus einem Hohlraum 25 (dargestellt in Figur 2) des Bauteils abgesaugt werden.

Anschließend wird in dem Ausführungsbeispiel gemäß Figur 1 das Bauteil 13 von der Bauplattform 23 gelöst und anschließend von dem Roboter 15 mit der Halterung 16 aus der Anlage 12 genommen. Alternativ (nicht dargestellt) kann das Bauteil 13 auch zusammen mit der Bauplattform 23 aus der Anlage 12 genommen werden und die Trennung des Bauteils 13 von der Bauplattform 23 erst nach erfolgter Entleerung des Hohlraums 25 erfolgen.

Zur Herstellung des Bauteils 13 werden die CAD-Daten eines Rechners CAD an eine Steuerung S übertragen, wobei diese Steuerung den CAD-Datensatz in eine für die Anlage 12 verarbeitbare Form überträgt (sogenanntes Slicen). Dabei werden die Daten so aufbereitet, dass eine Beschreibung der Geometrie des Bauteils 13 in Form der herzustellenden Lagen im Pulverbett vorliegen. Dieser Prozess ist an sich bekannt und soll an dieser Stelle nicht näher erläutert werden.

Erfindungsgemäß werden die CAD-Daten allerdings auch verwendet, um über eine Eingangsschnittstelle 26 im erfindungsgemäßen Programm PRG verarbeitet zu werden. Dieses ist in einem Prozessor P implementiert und dient dazu, aus den geometrischen Daten einen sinnvollen Bewegungsablauf 27 und eine Position I zu ermitteln, von der ausgehend der Bewegungsablauf 27 startet. Dieser Bewegungsablauf wird über eine Ausgangsschnittstelle 28 zu einer Schnittstelle 29 einer Steuerung CRL übertragen, die wiederum den Roboter 15 ansteuert. Die Steuerung CRL steuert den Roboter 15 so an, dass dieser sowohl die Position I ansteuern kann als auch von dieser Positionierung I ausgehend die Raumkurve des Bewegungsablaufes 27 beschreiben kann. Nach Durchlaufen des Bewegungsablaufs 27 wird die Absaugeinrichtung 17b verwendet, um evtl. noch vorhandene Pulverreste aus dem Hohlraum 25 abzusaugen. Die Absaugeinrichtung 17b kann ebenfalls durch die Steuerung CRL kontrolliert werden.

Außerdem kann die Steuerung CRL einen Schwingungsgenerator 30 ansteuern, an dem die Halterung 16 befestigt ist. Wie auch in Figur 2 dargestellt, kann über den Schwingungsgenerator 30 das Bauteil 13 in Schwingungen 31 (vgl. Figur 2), vorzugsweise im Ultraschallbereich, versetzt werden, um den Austrag des Füllmaterials 31 zu unterstützen.

Der Figur 2 kann der Verfahrensablauf zum Austrag des Füllmaterials 32 entnommen werden. Dargestellt ist das Bauteil 13 in der berechneten Positionierung I, mit der der Bewegungsablauf beginnt. Der Hohlraum 25 ist ein langgestreckter Kanal, wobei ein Verharren in der Positionierung I bei gleichzeitigem Eintrag der Schwingungen 31 dazu führt, dass das Füllmaterial 32 bis zu einem ersten Abschnitt 33 durch Unterstützung der Schwerkraft g aus der Verbindungsöffnung 24 ausgetragen wird. Danach wird durch eine Vierteldrehung (angedeutet in Figur 2) das Bauteil in eine Zwischenpositionierung II gebracht, so dass das Material bis zu einem Abschnitt 34 in den davorliegenden bogenförmigen Abschnitt 99 des Hohlraums 25 hinabrieselt. Dort bleibt es allerdings liegen, so dass das Bauteil 13 in eine Zwischenpositionierung III zurückgedreht werden muss, die der Positionierung I entspricht. Nun wird das Füllmaterial 25 aus dem bogenförmigen Abschnitt 99 durch die Verbindungsöffnung 24 ausgetragen. Gleichzeitig kann das Füllmaterial aus dem letzten sackförmigen Abschnitt hinunter rieseln. Eine Wiederholung der letzten beiden Bewegungen in eine Zwischenpositionierung IV (entspricht II) und zurück in eine Zwischenpositionierung V (entspricht I und III) führt dazu, dass auch der letzte Rest des Füllmaterials 25 ausgetragen wird.

Dieses Beispiel ist mit einer verhältnismäßig einfachen Geometrie des Hohlraums ausgestattet, insbesondere weil diese sich zweidimensional in der Zeichnung darstellen lässt. Die Computersimulation mittels des erfindungsgemäßen Computerprogramms lässt jedoch die Optimierung wesentlich komplexerer Hohlstrukturen zu, welche sich dreidimensional im Raum erstrecken.

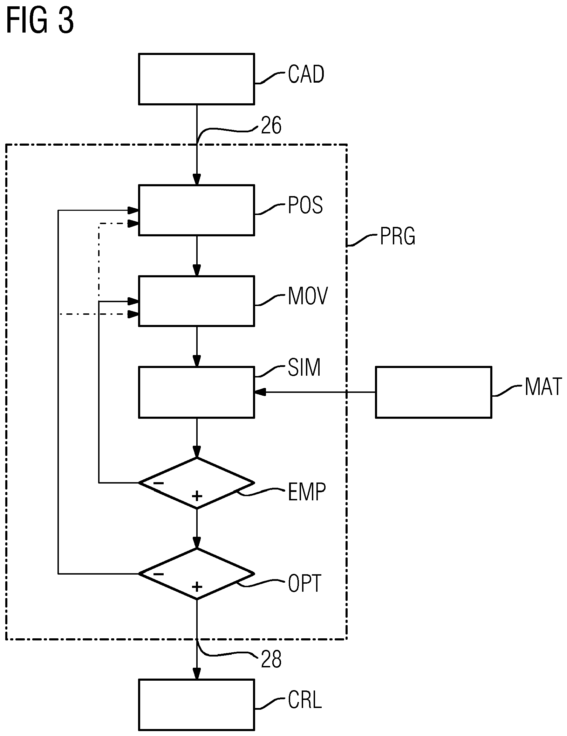

Ein möglicher Ablauf der Berechnung mittels des Computerprogramms PRG ist in Figur 3 dargestellt. Als Eingang an der Eingangsschnittstelle 26 dienen die CAD-Daten, wobei aus der Lage einer Verbindungsöffnung des zu berechnenden Bauteils die Positionierung POS ermittelt wird. Ausgehend von dieser Positionierung wird nun ein Bewegungsablauf MOV ermittelt und mit der Positionierung POS sowie dem Bewegungsablauf MOV (evtl. auch gewählten Zwischenpositionierungen, in denen die Bewegung angehalten wird) wird in einem Simulationsmodul SIM der Austrag von Füllmaterial simuliert. Hierbei kommen Materialdaten des Füllmaterials MAT zur Anwendung, die in das Simulationsmodul eingespeist werden. Software zur Simulation der Fließvorgänge können in das Computerprogramm implementiert werden, da sie als solche bereits programmiert wurden und beispielsweise käuflich erworben werden können. Ein Beispiel für eine solche Simulationssoftware ist das kommerzielle Softwareprodukt STAR-CCM+® des Herstellers CD-adapco, bei dem verschiedene Fluide ohne Abgrenzung gerechnet werden können (zum Beispiel Luft und fluidisiertes Pulver bei pulverbettbasieren Verfahren; Luft und flüssiges Monomer bei Stereolithographie).

Anschließend wird abgefragt, ob das Bauteil vollständig entleert ist (EMP). Wenn dies nicht der Fall ist, wird ein anderer Bewegungsablauf MOV (Alternativ auch eine andere Positionierung POS) generiert und einer weiteren Simulation zugeführt. Tendenziell werden die Bewegungsabläufe bei unbefriedigendem Entleerungsergebnis immer länger werden. Daher besteht eine weitere Abfrage, ob das Ergebnis noch in einer vertretbaren Zeit erreicht wird. In der Abfrage OPT wird dies entschieden, wobei im negativen Fall vorzugsweise das Verfahren in einer anderen Positionierung POS (alternativ mit einem neuen Bewegungsablauf MOV) noch einmal simuliert wird. Zuletzt wird das günstigste Bewegungsregime, bestehend aus einer Positionierung POSₙ und einem anschließenden Bewegungsablauf MOVₙ ausgewählt. Das optimale Ergebnis wird dann über die Ausgangsschnittstelle 28 an die Steuerung CRL weitergegeben.

Die einzusparenden Kosten durch eine komplette Entleerung lassen sich modellhaft an einer Kostenrechnung belegen. Ein leer 3,4 kg wiegendes Bauteil mit Hohlstrukturen, in das 1,7 kg Pulver passen, wird in einem Pulverbett hergestellt, welches 140 kg Pulver fasst. Bei einem angenommenen Preis für das Pulver von ca. 140 €/kg bedeutet dies Verlustkosten von ca. 240 €. Bei der Herstellung von einem Bauteil pro Tag liegen diese Pulververluste bei 70.000 €/Jahr. Für eine Serienfertigung kann der Roboter ca. 40 Bauteile pro Tag ausleeren. Dabei geht man von Bewegungszeiten von ca. 20 Minuten inklusive Rüstzeiten aus. Bei einer durchschnittlichen zusätzlichen Pulverrückführung von nur 0,5 kg Pulver pro Bauteil bedeutet dies einen Gewinn pro Tag von 2800 €/Roboter und somit bis zu 800.000 €/Jahr, wenn außer den oben genannten Bauteilen auch noch andere Bauteile entleert werden, um den Roboter sowie den oder die Rechner mit dem Prozessor P auszulasten.

## Patentansprüche

1. Verfahren zum Austragen von Füllmaterial (32) aus einem in einem Bauteil (13) vorhanden Hohlraum, wobei der Hohlraum eine Verbindungsöffnung (24) zur Umgebung des Bauteils (13) aufweist, aufweisend folgende Verfahrensschritte:
• Halten des Bauteils (13) in einer beweglichen Halterung (16),
• Bewegen des Bauteils (13) bei gleichzeitigem Austrag des Füllmaterials (32) durch die Verbindungsöffnung (24), wobei ein Prozessor (P) die Geometriedaten des Bauteils (13) verarbeitet, wobei ein auf dem Prozessor (P) ablaufendes Computerprogramm
• anhand eines Datensatzes die Geometrie des Hohlraums und der Verbindungsöffnung (24) in dem Bauteil (13) berücksichtigt,
• unter Berücksichtigung der Schwerkraft eine notwendige Positionierung des Bauteils (13) und einen anschließenden notwendigen Bewegungsablauf für das Bewegen des Bauteils (13) im Raum berechnet, damit das Füllmaterial (32) durch den Hohlraum zur Verbindungsöffnung (24) und durch die Verbindungsöffnung (24) aus dem Bauteil (13) ausgetragen wird,
**dadurch gekennzeichnet,**
**dass**
• durch das Computerprogramm das Austragen des Füllmaterials (32) simuliert wird, wobei bei der Simulation die Fließeigenschaften des Füllmaterials (32) berücksichtigt werden,
• wiederholt Simulationen mit verschiedenen Positionierungen und/oder verschiedenen Bewegungsabläufen durchgeführt werden,
• die Positionierung und der Bewegungsablauf ausgewählt wird, bei der und bei dem das meiste Füllmaterial (32) oder alles Füllmaterial (32) in der kürzesten Zeit aus dem Bauteil (13) ausgetragen wird,
wobei das Bauteil nach der ausgewählten Positionierung und dem ausgewählten Bewegungsablauf bewegt wird.

2. Verfahren nach Anspruch 1,
**dadurch gekennzeichnet,**
**dass** vor und/oder nach dem Bewegen des Bauteils (13) ein Absaugen von Füllmaterial durch die Verbindungsöffnung (24) hindurch erfolgt.

3. Verfahren nach einem der voranstehenden Ansprüche,
**dadurch gekennzeichnet,**
**dass** sich die Halterung (16) an einem Roboter (15) befindet und der Bewegungsablauf durch den Roboter (15) vollzogen wird.

4. Verfahren nach Anspruch 3,
**dadurch gekennzeichnet,**
**dass** der Roboter (15) Bewegungen um mindestens drei Achsen ermöglicht.

5. Verfahren nach einem der vorstehenden Ansprüche,
**dadurch gekennzeichnet,**
**dass** das Bauteil (13) durch einen Schwingungsgenerator (30) in mechanische Schwingungen versetzt wird.

6. Verfahren nach Anspruch 5,
**dadurch gekennzeichnet,**
**dass** die Schwingungen im Ultraschallbereich liegen.

7. Verfahren nach einem der voranstehenden Ansprüche,
**dadurch gekennzeichnet,**
**dass** das Füllmaterial (32) aus einem Pulver besteht und das Fließverhalten des Pulvers durch das Computerprogramm aus den Parametern Partikelgröße und/oder Partikelform und/oder Partikelmaterial und/oder Partikeldichte berechnet wird.

8. Computerprogramm, umfassend Befehle, die bei der Ausführung des Programms durch einen Computer diesen veranlassen, ein Verfahren nach einem der Ansprüche 1 bis 7 ; mittels einer Fertigungseinheit nach Anspruch 9 auszuführen.

9. Fertigungseinheit
**dadurch gekennzeichnet,**
**dass** diese aufweist:
• eine bewegliche Halterung (16) zum Halten eines Bauteils (13)
• einen Prozessor (P), der die Fertigungseinheit veranlasst, ein Verfahren nach einem der Ansprüche 1 bis 7 auszuführen,
• einen Aktor, insbesondere einen Roboter (15), zur Bewegung der beweglichen Halterung,
• eine Steuerung zum Bewegen des Aktors, wobei die Positionierung und der Bewegungsablauf als Eingangsgrößen über eine Schnittstelle (29) übergebbar sind.

10. Fertigungseinheit nach Anspruch 9,
**dadurch gekennzeichnet,**
**dass** dies zusätzlich aufweist:
• eine Anlage (12) zum additiven Fertigen des Bauteils (13)
• eine Materialschnittstelle (14) zur Aufnahme des Bauteils (13) durch die Halterung (16).

## Claims

1. Method for removing filling material (32) from a cavity present in a component (13), the cavity having a connection opening (24) to the surroundings of the component (13), having the following method steps:
• holding the component (13) in a movable mounting (16),
• moving the component (13) while at the same time removing the filling material (32) through the connection opening (24),
a processor (P) processing the geometry data of the component (13), a computer program running on the processor (P)
• taking into account the geometry of the cavity and of the connection opening (24) in the component (13) on the basis of a dataset,
• while taking gravitational force into account, calculating a necessary positioning of the component (13) and a subsequent necessary sequence of movements for moving the component (13) in space in order that the filling material (32) is removed through the cavity to the connection opening (24) and through the connection opening (24) out of the component (13),
**characterized**
**in that**
• the removal of the filling material (32) is simulated by the computer program, the flow properties of the filling material (32) being taken into account in the simulation,
• simulations with different positionings and/or different sequences of movements are carried out repeatedly,
• the positioning and the sequence of movements with which most filling material (32) or all of the filling material (32) is removed from the component (13) in the shortest time is chosen,
the component being moved in accordance with the selected positioning and the selected sequence of movements.

2. Method according to Claim 1,
**characterized**
**in that** before and/or after moving the component (13), a suction removal of filling material through the connection opening (24) is performed.

3. Method according to one of the preceding claims,
**characterized**
**in that** the mounting (16) is located on a robot (15) and the sequence of movements is performed by the robot (15).

4. Method according to Claim 3,
**characterized**
**in that** the robot (15) allows movements about at least three axes.

5. Method according to one of the preceding claims,
**characterized**
**in that** the component (13) is made to undergo mechanical vibrations by a vibration generator (30).

6. Method according to Claim 5,
**characterized**
**in that** the vibrations are in the ultrasonic range.

7. Method according to one of the preceding claims,
**characterized**
**in that** the filling material (32) consists of a powder and the flow behaviour of the powder is calculated by the computer program from the parameters particle size and/or particle shape and/or particle material and/or particle density.

8. Computer program, comprising commands which, when the program is executed by a computer, cause it to perform a method according to one of Claims 1 to 7 by means of a production unit according to Claim 9.

9. Production unit,
**characterized**
**in that** it has:
• a movable mounting (16) for holding a component (13)
• a processor (P), which causes the production unit to perform a method according to one of Claims 1 to 7,
• an actuator, in particular a robot (15), for movement of the movable mounting,
• a controller for moving the actuator, the positioning and the sequence of movements being transferable as input variables via an interface (29).

10. Production unit according to Claim 9,
**characterized**
**in that** it additionally has:
• an installation (12) for additively manufacturing the component (13) and
• a material interface (14) for receiving the component (13) by the mounting (16).

## Revendications

1. Procédé pour vider de son matériau (32) de remplissage une cavité présente dans une pièce (13), la cavité ayant une ouverture (24) de communication avec ce qui est autour de la pièce (13), comportant les stades de procédé suivants :
• on maintient la pièce (13) dans une fixation (16) mobile,
• on déplace la pièce (13) en la vidant simultanément du matériau (32) de remplissage par l'ouverture (24) de communication,
dans lequel un processeur (P) traite les données géométriques de la pièce (13), dans lequel un programme d'ordinateur, se déroulant sur le processeur (P),
• prend en compte, à l'aide d'un ensemble de données, la géométrie de la cavité et l'ouverture (24) de communication dans la pièce (13),
• en prenant en compte la force de gravité, calcule un positionnement nécessaire de la pièce (13) et un déroulement nécessaire du déplacement ensuite pour le déplacement de la pièce (13) dans l'espace, afin d'évacuer de la pièce (13) le matériau (32) de remplissage par la cavité vers l'ouverture (24) de communication et par l'ouverture (24) de communication,
**caractérisé en ce que**
• on simule, par le programme d'ordinateur, l'évacuation du matériau (32) de remplissage, les propriétés d'écoulement du matériau (32) de remplissage étant prises en compte dans la simulation,
• on effectue des simulations répétées avec des positionnements différents et/ou des déroulements de déplacements différents,
• on choisit le positionnement et le déroulement du déplacement pour lesquels la plus grande partie du matériau (32) de remplissage ou tout le matériau (32) de remplissage est évacué dans le temps le plus court de la pièce (13),
dans lequel on déplace la pièce suivant le positionnement sélectionné et le déroulement du déplacement sélectionné.

2. Procédé suivant la revendication 1,
**caractérisé**
**en ce qu'**avant et/ou après le déplacement de la pièce (13), on effectue une aspiration du matériau de remplissage par l'ouverture (24) de communication.

3. Procédé suivant l'une des revendications précédentes,
**caractérisé**
**en ce que** la fixation (26) se trouve sur un robot (15) et on effectue le déroulement du déplacement par le robot (15).

4. Procédé suivant la revendication 3,
**caractérisé**
**en ce que** le robot (15) rend possible les déplacements autour d'au moins trois axes.

5. Procédé suivant l'une des revendications précédentes,
**caractérisé**
**en ce que** l'on change de place la pièce (13) en des oscillations mécaniques par un générateur (30) d'oscillations.

6. Procédé suivant la revendication 5,
**caractérisé**
**en ce que** les oscillations sont dans le domaine des ultrasons.

7. Procédé suivant l'une des revendications précédentes,
**caractérisé**
**en ce que** le matériau (32) de remplissage est constitué d'une poudre et on calcule le comportement d'écoulement de la poudre par le programme d'ordinateur, à partir des paramètres granulométrie et/ou forme des particules et/ou matériau des particules et/ou masse volumique des particules.

8. Programme d'ordinateur, comprenant des instructions, qui, lors de l'exécution du programme par un ordinateur, font que celui-ci effectue un procédé suivant l'une des revendications 1 à 7, au moyen d'une unité de fabrication suivant la revendication 9.

9. Unité de fabrication,
**caractérisés**
**en ce qu'**elle a :
• une fixation (16) mobile pour maintenir une pièce (13),
• un processeur (P), qui fait que l'unité de fabrication effectue un procédé suivant l'une des revendications 1 à 7,
• un actionneur, notamment un robot (15), pour le déplacement de la fixation mobile,
• une commande pour le déplacement de l'actionneur, le positionnement et/ou le déroulement du déplacement, comme grandeur d'entrée, pouvant être donnée par une interface (29).

10. Unité de fabrication suivant la revendication 9, **caractérisée en ce qu'**elle a, en outre :
• une installation (12) de fabrication additive de la pièce (13),
• une interface (14) matérielle de réception de la pièce (13) par la fixation (16).
